# EUROPEAN PATENT APPLICATION

(11) **EP 2 034 587 A2**
(43) Date of publication of application: **11.03.2009**
(21) Application number: 08163914.8
(22) Date of filing: 09.09.2008
(51) Int. Cl.: H02J 9/02

(54) **Method and arrangement in conjunction with emergency light**

(30) Priority: 10.09.2007 FI 20075628
(71) Applicant: Teknoware Oy, 15200 Lahti (FI)
(72) Inventor: Tommola, Timo-Pekka, 15700, Lahti (FI)
(74) Representative: Valkeiskangas, Tapio Lassi Paavali

(57) **Abstract**

An emergency light and a method in conjunction with an emergency light, the emergency light comprising one or more LED light sources (3) for producing emergency lighting, a super capacitor (C) arranged to supply one or more LED light sources (3), a charging apparatus (1) arranged to charge the super capacitor (C) to a nominal voltage defined for it. The charging apparatus (1) is arranged to charge the super capacitor (C) in a current-controlled manner, and the equipment of the emergency light further comprises means (D_{Z}) for short circuiting the charging current produced by the charging apparatus (1) past the super capacitor (C) after the super capacitor (C) has achieved its nominal voltage, the charging apparatus (1) being further arranged to detect an increase in the charging voltage as an indication of a damage in the connection between the charging apparatus (1) and the capacitor (C).

## Description

### BACKGROUND OF THE INVENTION

The invention relates to emergency lights and particularly to using emergency lights together with a super capacitor.

According to law, public buildings must have emergency lighting in the event of a power failure. These systems are defined by standards EN 1838 and EN 50172. In practice, the systems are provided with a battery back-up. Other types of standby electric sources are also used, e.g. hospitals may have a standby electric supply powered by a combustion engine.

Standby lights are most commonly implemented by fluorescent lamps, because a relationship of their service life to luminous efficiency is good. A problem with fluorescent lamps is mercury used in them. Especially door lights are realized today mainly with LEDs.

Batteries used in emergency lights have also developed greatly. Lead acid batteries and NiCd batteries also contain environmentally hazardous substances. One significant way of storing energy is a capacitor. Capacitors are almost the only reserve energy sources used for buffering memories today in the field of information technology. As a result, the capacitor industry has started to develop 'super capacitors'. Super capacitors employ double-layer technology and are low-voltage high-capacitance capacitors.

By modern technology it is possible to eliminate poisonous substances from standby lights entirely. This can be realized by joining a LED light source and the advantages of a super capacitor.

Super capacitors provide advantages, which make them very comfortable to use in emergency lighting. The service life of a capacitor is approximately ten years, which is about twice as much as that of presently used batteries. Capacitors may also be charged up to a desired voltage in a few minutes, which is only a fraction of time that is needed for charging batteries.

Correspondingly, LED light sources are very well suited to be used in emergency lights. While in operation, LEDs consume a very small amount of power, wherefore it is sensible to use them in conjunction with capacitors.

Publication US2006/0044801 discloses a principle of using LEDs together with a capacitor. The solution presented in the publication provides a very short-term emergency lighting, because the voltage of the capacitor drops quickly in the circuit presented in the publication.

The voltage of super capacitors is not comparable to the cell voltage of batteries, but a super capacitor may in principle be charged to an arbitrary voltage. However, super capacitors do have a voltage to which it is recommendable to charge them, and voltages higher than the recommended voltage reduce the service life of the capacitor significantly.

Super capacitors must thus be charged carefully especially in conjunction with emergency lights or similar lights in fulfilling the official requirements to make the service life of the super capacitor as long as possible and to ensure a reliable charging of the capacitor, allowing the use of the emergency light if the normal supply network is down.

If the capacitor is charged in a voltage-controlled manner, in which case the charging apparatus charges the capacitor to a predefined voltage, it is difficult to check the condition of the connection between the charging apparatus and the capacitor. When the capacitor charged to a desired voltage is detached from the charging apparatus, there occurs no change in the charging current or the output voltage of the charging apparatus. Consequently, damages in the circuitry between the charging apparatus and the capacitor cannot be detected.

### BRIEF DESCRIPTION OF THE INVENTION

It is thus an object of the invention to provide emergency light equipment and a method in such a manner that the above-mentioned problems can be solved. The object of the invention is achieved by a method and equipment, which are characterized by what is stated in the independent claims. The preferred embodiments of the invention are disclosed in the dependent claims.

The invention is based on charging a super capacitor acting as an energy reserve for emergency light equipment in a current-controlled manner so that the charging apparatus is allowed to supply current after the capacitor has already been charged to its nominal voltage. In parallel with the capacitor there is arranged a circuit, which allows current to flow through it when the capacitor voltage has its nominal value. A disconnection between the charging apparatus and the capacitor may then be detected in the charging apparatus as an increase in the output voltage of the charging apparatus.

The method and system of the invention provide the advantage of improved reliability while a super capacitor is charged to a nominal voltage. Reliability improves both because of accurate charging to a specific voltage and with respect to the functioning of the connection.

### BRIEF DESCRIPTION OF THE INVENTION

The invention will now be described in greater detail in connection with preferred embodiments and with reference to the attached drawings, in which Figure 1 shows a simplified block diagram of an apparatus according to the invention; Figure 2 illustrates charging current as a function of output voltage of a charging apparatus; Figure 3 shows discharge curves of a super capacitor and a battery; and Figure 4 shows charge curves of a super capacitor and a battery.

### DETAILED DESCRIPTION OF THE INVENTION

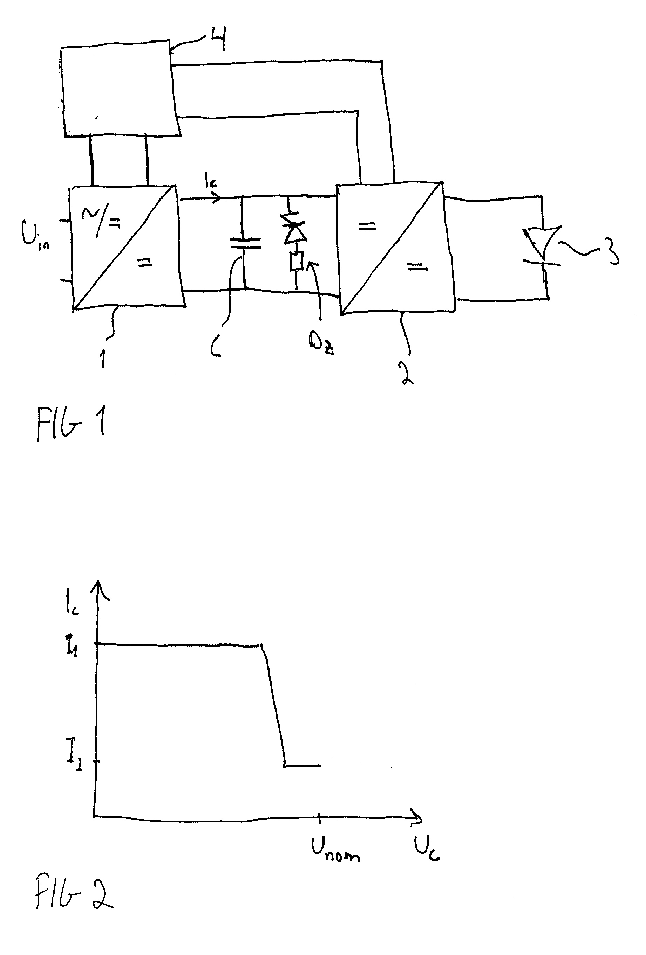

Figure 1 shows a principled block diagram of emergency light equipment according to the invention. An emergency light comprises a charging apparatus 1, such as a chopper, which produces a charging current Ic from an input voltage Uin. The input voltage may be a mains voltage or a direct voltage. The charging current Ic charges a super capacitor C acting as an energy reserve so that the super capacitor achieves its nominal voltage, which is of the order of about 4V, for example.

In parallel with the super capacitor there is connected a connection, allowing current to flow through it while the super capacitor is being charged to its nominal voltage. In the figure, this type of connection is provided by a circuit D_{Z} formed of a zener diode and a resistor.

The super capacitor is further connected with a chopper 2, which produces a required voltage from the capacitor voltage in order to burn a diode 3 used for lighting. The chopper is shown in Figure 1 in such a manner that it also has another input directly from another supplying chopper 4, which works when the network operates in a normal way. In this case, the chopper supplying the light emitting diode 3 comprises means, by which the source of supply energy is changed depending on the condition of the network.

According to the invention, the charging apparatus 1 supplies the super capacitor in a current-controlled manner, i.e. supplies the super capacitor with a current of a predefined magnitude in order to charge it. To realize the set value for current, the charging apparatus must adjust its output voltage so that the output voltage increases as the voltage of the chargeable capacitor increases in order to supply current.

When the voltage of the super capacitor C has risen to a predefined nominal value Uₙₒₘ for the capacitor as a result of the charging current, the output voltage of the charging apparatus corresponds approximately to the voltage of the capacitor. In accordance with the invention, however, the charging apparatus continues to supply current I_{c} after the capacitor C has already been fully charged. After the capacitor has been charged, the charging current starts to flow through the connection D_{Z} connected in parallel with the capacitor. According to a preferred embodiment of the invention, a connection which allows the charging current to flow through it while the capacitor C is being charged comprises a zener diode. Preferably, a resistor is also connected in series with the zener diode. To limit a voltage in the reverse direction to a specific value is a known property of zener diodes. In other words, the zener diode starts to conduct current as a specific voltage is exceeded. By selecting the super capacitor and the zener diode in such a manner that their voltage values correspond to one another as well as possible, it is possible that, when the voltage of the super capacitor increases to its nominal value, the zener diode connected in parallel therewith is set to a conducting state. The resistor connected in series with the zener diode is needed for limiting the current flow and for dissipating power from the circuit.

For the sake of clarity, Figure 4 shows a curve 41 of charging the used super capacitor to its nominal voltage Uₙₒₘ when constant current is used for charging. Figure 4 illustrates how the capacitor voltage increases steadily towards the nominal value. In comparison, Figure 4 also shows a normal charge curve 42 for a battery, when the charging occurs at constant voltage. Charging with constant voltage takes a significantly longer time than current-controlled charging used for charging a capacitor.

Instead of a zener diode connection, some other circuit, possibly based on voltage measurement and an active switch component, may naturally be used, allowing current to flow through it when the super capacitor voltage is rising to its nominal value.

An absolute condition for the operation of the circuit of Figure 1 is that the connection between the charging apparatus 1 and the super capacitor C is working. According to the invention, the condition of the connection may be detected on the basis of the voltage of the charging apparatus. As mentioned above, the output voltage of the charging apparatus follows the voltage of the chargeable super capacitor. If this output voltage, however, rises to an unusually high value, i.e. above the normal operating range, the circuit that supplies the capacitor has damaged. By increasing the output voltage, the charging apparatus tries to make the current of a desired magnitude flow to the capacitor. If the circuit is broken, the current does not flow, and the output voltage increases. Since the charging apparatus constantly supplies the capacitor and its parallel connection with current, the above-mentioned damages may be detected whenever the chopper receives an input voltage Uᵢₙ and produces a charging current I_{c}.

According to a preferred embodiment of the invention, the charging of the super capacitor acting as an energy reserve is carried out in such a manner that the magnitude of the charging current I_{c} is reduced at the end stage of the charging. The charging current is reduced because the service time of super capacitors becomes shorter as the temperature of the surroundings rises. Power that is converted into heat next to the super capacitor must be as low as possible in order for the super capacitor to maintain its functionality as long as possible. Since the output voltage of the charging apparatus increases along with the voltage of the chargeable super capacitor, the set value for current may be diminished in response to an increase in the output voltage of the charging apparatus close to the nominal voltage Uₙₒₘ of the capacitor. This limit may be equal to, for instance, 90% of the nominal voltage Uₙₒₘ of the capacitor.

Figure 2 shows an exemplary diagram of the magnitude of the charging current I_{c} as a function of the voltage U_{c} of the capacitor. In the beginning of the charging, as the voltage of the capacitor is low, significantly below the nominal voltage Uₙₒₘ, the charging is carried out with current I₁, the magnitude of which is predefined. When it is detected in the charging apparatus that the output voltage rises as the capacitor voltage rises, the charging current is reduced to another predefined value I₂. The charging apparatus maintains this lowest value also when the charging current no longer increases the voltage of the super capacitor. Thus, the super capacitor does not heat up in an undesired manner so much as by using a higher current.

The chopper 2 shown in Figure 1 produces a required voltage from the voltage of the super capacitor in order to burn the LED acting as a light source for the emergency light. This chopper or converter is typically a step-up chopper, because the voltage of the super capacitor drops quickly below a threshold voltage U_{LED} of the LED. The chopper 2 may also step down the voltage, so that when the voltage is high, it is reduced. When the voltage of the capacitor drops because the LED light source is supplied, the chopper starts to increase the voltage.

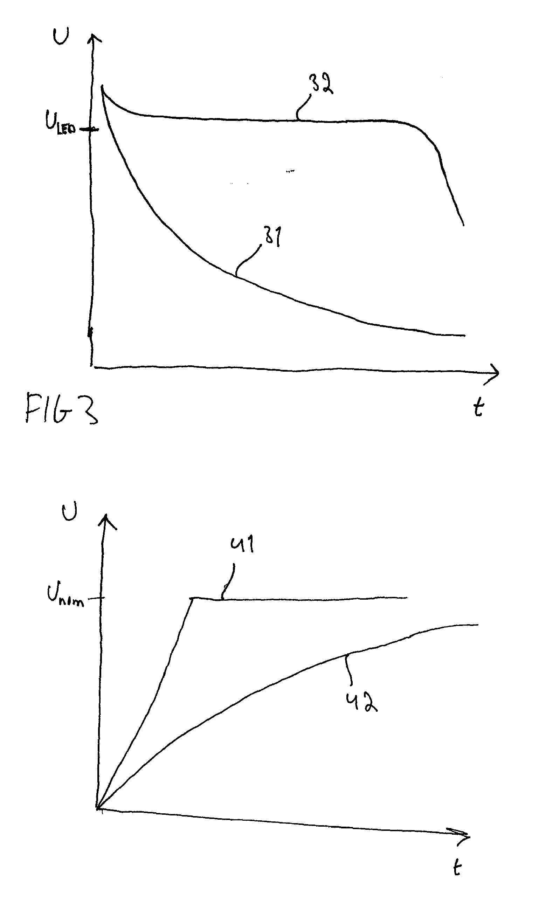

Figure 3 shows an example of a typical discharge curve for a capacitor, i.e. the terminal voltage 31 of the capacitor as a function of time, when a constant current is taken from the capacitor. As shown by the figure, the capacitor voltage 31 drops quickly to a value, which is not sufficient for exceeding the threshold voltage U_{LED} of the LED. In comparison, Figure 3 also shows a corresponding discharge curve 32 when a battery is used. The figure shows how the battery maintains the voltage corresponding to the cell voltage so that the voltage need not be increased in order to burn the LED. By using the step-up chopper in connection with the super capacitor, an emergency light may be provided, by which the LED may be burnt for one hour, for example.

According to a preferred embodiment of the invention, the chopper 2 is operated in a current-controlled manner, which means that it supplies the LED light source with a current of a specific magnitude. The chopper is thus controlled in such a manner that it adjusts its output voltage for the LED light source in order to achieve a desired current.

Figure 1 shows the chopper 2 supplying the LED 3 in such a manner that it receives two inputs. Normally, when the supplying network or some other voltage is available, the chopper 2 is supplied with an apparatus 4, which produces a voltage suitable for the chopper 2 from the voltage of the supplying network or the like. In the embodiment of Figure 1, the charging apparatus 1 is connected to the apparatus 4 in order to supply it, and said apparatus 4 is, for instance, a converter, which produces a constant voltage for the chopper 2. In this type of arrangement the apparatus 4 may further comprise means, which connect the voltage of the charging apparatus 1 to the LED 3 directly. It is obvious that there are various ways of changing over from the normal network to energy charged in the super capacitor. The supply change-over may be carried out by using different connections, change-over switches, relays or the like, and the present invention does not differ from the previous emergency light connections.

When the network is in operation and the emergency light is used as a guide light, the LED produces a brighter light than during a power failure. It is thus easier to detect the light, as the luminosity of the surroundings is higher. During a power failure, the LED may be burnt with a dimmer light, because the resolution is better during a power failure and the service time of the emergency light may be further extended.

Figure 1 shows the invention with reference to one LED light source only. However, it is obvious that there may be a plurality of LEDs. Accordingly, there may be a plurality of super capacitors connected in parallel and/or in series. When connected in series, each super capacitor should have its own current control and, accordingly, when connected in parallel, super capacitors require total current control as well as excess voltage control.

It is obvious to a person skilled in the art that as technology advances, the basic idea of the invention may be implemented in a variety of ways. The invention and the embodiments thereof are thus not restricted to the above examples but may vary within the scope of the claims.

## Claims

1. An emergency light with equipment comprising one or more LED light sources (3) for producing emergency lighting, a super capacitor (C) arranged to supply one or more LED light sources (3), a charging apparatus (1) arranged to charge the super capacitor (C) to a nominal voltage defined for it, **characterized in that** the charging apparatus (1) is arranged to charge the super capacitor in a current-controlled manner and that the equipment of the emergency light further comprises means (D_{Z}) for short circuiting the charging current produced by the charging apparatus past the super capacitor after the super capacitor has achieved its nominal voltage, the charging apparatus (1) being further arranged to detect an increase in the charging voltage as an indication of a damage in the connection between the charging apparatus (1) and the capacitor (C).

2. An emergency light as claimed in claim 1, **characterized in that** the means for short circuiting the extra charging current produced by the charging apparatus comprise a zener diode connected in parallel with the super capacitor (C) of the emergency light.

3. An emergency light as claimed in claim 2, **characterized in that** the means for short circuiting the extra charging current produced by the charging apparatus also comprise a resistor connected in series with the zener diode.

4. An emergency light as claimed in claim 1, **characterized in that** the means for short circuiting the extra charging current produced by the charging apparatus comprise an element determining the capacitor voltage and an active switching device acting in response to the element and arranged to lead the extra charging current past the super capacitor.

5. An emergency light as claimed in any one of the preceding claims 1 to 4, **characterized in that** the emergency light also comprises a chopper (2) arranged to produce from the voltage of the super capacitor a voltage for the LED light source, which is higher than a threshold voltage of the LED light source.

6. An emergency light as claimed in claim 5, **characterized in that** the chopper (2) is arranged to supply the LED light source in a current-controlled manner, preferably by using constant current.

7. An emergency light as claimed in any one of the preceding claims 1 to 6, **characterized in that** the charging apparatus is arranged to reduce the charging current when the output voltage of the charging apparatus increases close to the nominal voltage of the super capacitor.

8. A method in conjunction with an emergency light, the equipment of the emergency light comprising one or more LED light sources for producing emergency lighting, a super capacitor for supplying one or more LED light sources, and a charging apparatus for charging the super capacitor to a nominal voltage defined for it, **characterized by** the method comprising the steps of charging the super capacitor with the charging apparatus in a current-controlled manner, short circuiting the extra charging current past the super capacitor after the super capacitor has achieved its nominal voltage, and detecting a damage in the connection between the charging apparatus and the capacitor as an increase in the charging voltage.

9. A method as claimed in claim 8, **characterized by** the method also comprising a step of producing from the voltage of the super capacitor a voltage for the LED light source, which is higher than a threshold voltage of the LED light source.

10. A method as claimed in claim 8 or 9, **characterized by** the charging of the super capacitor comprising the steps of producing a charging current (I_{c}) according to a first set value for current (I₁) to charge the super capacitor, detecting an increase in the output voltage of the charging apparatus close to the nominal voltage (Uₙₒₘ) of the super capacitor, producing a charging current (I_{c}) according to a second set value for current (I₂) to charge the super capacitor, the second set value for current being lower than the first set value for current.
